# EUROPÄISCHE PATENTANMELDUNG

(11) **EP 1 519 125 A2**
(43) Veröffentlichungstag der Anmeldung: **30.03.2005**
(21) Anmeldenummer: 04015464.3
(22) Anmeldetag: 01.07.2004
(51) Int. Cl.: F25B 17/08, F25C 1/16

(54) **Verfahren und Vorrichtungen zum schnellen Erstarren wasserhaltiger Substanzen**

(30) Priorität: 25.09.2003 DE 10344455
(71) Anmelder: ZEO-TECH Zeolith Technologie GmbH, 85716 Unterschleissheim (DE)
(72) Erfinder: Maier-Laxhuber, Peter, Dr., 85276 Pfaffenhofen (DE); Becky, Andreas, 85521 Ottobrunn (DE); Wörz, Reiner, 85293 Reichertshausen (DE); Richter, Gert, 85716 Unterschleissheim/Riedmoos (DE); Weinzierl, Norberl, 85354 Freising (DE); Schmidt, Ralf, Dr., 85354 Freising (DE); Totschnig, Leo, 80939 München (DE); Grupp, Christoph, 82418 Murnau (DE); Binnen, Manfred, 80933 München (DE)

(57) **Zusammenfassung**

Verfahren und Vorrichtungen zum Erstarren wasserhaltiger Substanzen durch direkte Verdampfung von Wasser aus der Substanz und Sorption des Wasserdampfes in einem Sorptionsmittel innerhalb eines Vakuumsystems,
wobei die wasserhaltige Substanz und das Sorptionsmittel von Umgebungsdruckniveau auf einen Systemdruck von unter 5 mbar (absolut) mittels einer Vakuumpumpe evakuiert werden und die dabei von der Vakuumpumpe abgesaugten, nicht sorbierbaren Gase durch das Sorptionsmittel hindurchgesaugt werden,
die Masse des verwendeten Sorptionsmittels mindestens die Hälfte der Masse des Wasseranteils in der Substanz beträgt,
der Erstarrungsvorgang in weniger als 2 Minuten, insbesondere in weniger als 20 Sekunden erreicht ist,
die wasserhaltige Substanz in einem aus dem Vakuumsystem entnehmbaren Erstarrungsbehältnis erstarrt und das Vakuumsystem anschließend belüftet wird und die erstarrte Substanz zusammen mit dem Erstarrungsbehältnis aus dem Vakuumsystem entnommen wird.

## Beschreibung

Die Erfindung betrifft ein Verfahren und Vorrichtungen zum schnellen Erstarren wasserhaltiger Substanzen durch direkte Verdampfung von Wasser aus der Substanz und Sorption des Wasserdampfes in einem Sorptionsmittel unter Vakuum.

Bekannt sind Verfahren und Vorrichtungen zur Kühlung von wasserhaltigen Flüssigkeiten nach dem Verdampfungsprinzip. Hierbei wird durch Absaugen von Wasserdampf eine wasserhaltige Flüssigkeit zum Verdampfen gebracht und dadurch abgekühlt. Um wasserhaltige Flüssigkeiten auf Temperaturen nahe dem Erstarrungspunkt abzukühlen, müssen erhebliche Wasserdampfvolumina abgesaugt werden.
Obwohl die direkte Verdampfung eine sehr schnelle und schonende Kühlung ermöglicht, konnte sie bislang nur in wenigen Anwendungsfällen wirtschaftlich umgesetzt werden.

Adsorptionsvorrichtungen sind Apparate, in denen ein festes Sorptionsmittel ein zweites, bei tieferen Temperaturen siedendes Mittel, das Arbeitsmittel, dampfförmig unter Wärmefreisetzung sorbiert (Sorptionsphase). Das Arbeitsmittel verdampft dabei in einem Verdampfer unter Wärmeaufnahme. Nachdem das Sorptionsmittel gesättigt ist, kann es durch Wärmezufuhr bei höherer Temperatur wieder desorbiert werden (Desorptionsphase). Dabei dampft Arbeitsmittel aus dem Adsorptionsmittel ab. Der Arbeitsmitteldampf kann rückverflüssigt werden und anschließend erneut verdampfen.

Adsorptionsapparate zum Kühlen mit festen Sorptionsmitteln sind aus der EP 0 368 111 und der DE-OS 34 25 419 bekannt. Sorptionsmittelbehälter, gefüllt mit Sorptionsmitteln, saugen dabei Arbeitsmitteldampf welcher in einem Verdampfer entsteht, ab und sorbieren ihn unter Wärmefreisetzung. Diese Sorptionswärme muss dabei aus der Sorptionsmittelfüllung abgeführt werden. Die Kühlapparate können zum Kühlen und Warmhalten von Lebensmitteln in thermisch isolierten Boxen eingesetzt werden.

In der deutschen Patentschrift DE 4003107 ist ein Verfahren zur Eiserzeugung unter Vakuum bei gleichzeitiger Sorption des abströmenden Wasserdampfes in einem Sorptionsstoff beschrieben. In einem flanschbaren, vakuumfesten Vereisungsgefäß erstarrt dabei eine wasserhaltige Flüssigkeit.

Aufgaben der Erfindung sind ein wirtschaftliches Verfahren und Vorrichtungen zur einfachen und schnellen Erstarrung von wasserhaltigen Substanzen unter Vakuum.

Gelöst werden diese Aufgaben durch die kennzeichnenden Merkmale der Ansprüche 1, 10 und 15. Die abhängigen Ansprüche zeigen weitere erfinderische Vorrichtungen und Verfahren auf.

Das erfindungsgemäße Verfahren erlaubt es, innerhalb kürzester Zeit eine wasserhaltige Substanz abzukühlen und zu erstarren. Die erstarrte Substanzmenge kann ohne aufwändige Technik und ohne zeitraubende Vorbereitungen mehrere Kilogramm pro Minute erreichen. Eine zeitgleiche und aufwändige Abführung von Wärme aus dem Sorptionsmittel ist nicht notwendig, da die Menge Sorptionsmittel so bemessen ist, dass deren fühlbare Wärmekapazität ausreicht, die bei der Sorption freiwerdende Wärme soweit zu puffern, dass die Sorptionsreaktion noch ausreichend weit von ihrem thermodynamischen Gleichgewichtspunkt entfernt ist. Abhängig von den Strömungsbedingungen des Wasserdampfes läuft die Erstarrung dabei innerhalb weniger Sekunden ab. Erfindungsgemäß kann die Sorptionsmittelmenge so groß sein, dass die vorgesehene Substanzmenge nur einmal erstarrt werden kann oder aber ein mehrfaches dessen betragen. Im letzteren Fall sollte jedoch das Sorptionsmittel zwischendurch auch Wärme abgeben können.
Die Temperatur des Sorptionsmittels kann beim Sorptionsprozess Temperaturen von über 100 °C erreichen. Diese sind für die Erwärmung bzw. Warmhaltung von Speisen und/oder Getränken ausreichend hoch.

Erfindungsgemäß ist die Sorptionsmittelmenge so zu dimensionieren und so anzuordnen, dass für den einströmenden Wasserdampf nur ein minimaler Druckabfall innerhalb des Sorptionsmittels überwunden werden muss. Dabei darf der Druckabfall nicht mehr als 5 mbar betragen. Zudem muss das Sorptionsmittel dem zuströmenden Wasserdampf ausreichend Oberfläche zur Anlagerung bieten. Andererseits darf die Schüttdicke des eingesetzten .Sorptionsmittels nicht zu dünn sein, damit kein nennenswerter Wasserdampf durch die Schüttung hindurch zur Vakuumpumpe strömen kann. Je nach Art des Sorptionsmittels muss demzufolge dessen Schüttdicke und der Durchmesser des einzelnen Sorptionsmittel-Granulates dieser Forderung angepasst werden. Bei Granulaten, die Zeolith enthalten beträgt die Schüttdicke 2 bis 5 cm bei einem typischen Granulatdurchmesser von 3 bis 5 mm.
Das Vakuumsystem muss erfindungsgemäß so gestaltet sein, dass der durch die Vakuumpumpe angesaugte Luft- und Dampfstrom durch den Sorptionsstoff hindurch und nicht teilweise an diesem vorbeigelenkt wird. Zusätzlich ist darauf zu achten, dass innerhalb der Sorptionsmittelfüllung keine nicht sorbierbare Gase verbleiben, welche den Wasserdampf hindern, zum Sorptionsstoff vorzudringen.

Das Erstarrungsbehältnis kann jede beliebige Form einnehmen und aus beliebigen Materialien geformt sein. Technisch zwingend notwendig ist, dass während des Erstarrungsvorgangs eine genügend große Öffnung zum Abströmen des Wasserdampfes in das Sorptionsmittels besteht. Erfindungsgemäß muss es mit der erstarrten Substanz aus dem Vakuumsystem entnehmbar sein.

Vorteilhaft ist es, wenn die wasserhaltige Substanz in die Vakuumkammer eingesaugt werden kann oder die wasserhaltige Substanz bereits beim Einbringen in das Vakuumsystem im Erstarrungsbehältnis enthalten ist. Weiterhin kann es vorteilhaft sein, wenn das Erstarrungsbehältnis durchsichtig oder essbar ist. Durchsichtige Behältnisse gestatten es, den Erstarrungsvorgang zu beobachten, sofern umgebende Teile des Vakuumsystems den Blick auf das Erstarrungsbehältnis ermöglichen. Für den Fall der Speiseeiserzeugung kann das Erstarrungsbehältnis z. B. die Form einer Waffeltüte annehmen.
Besonders zweckmäßig kann es sein, das Erstarrungsbehältnis nach dem Erstarrungsprozess noch unter Vakuum luftdicht zu verschließen. Vorteilhaft ist z.B. wenn die erstarrte Substanz gefrorenes Wasser oder Salzwasser ist, das in der Anwendung als Kälteakku eingesetzt werden soll. Wegen der luftdichten Verpackung wird das zu kühlende Produkt nicht benetzt und wegen der luftfreien Verpackung besteht ein optimaler Wärmeübergang zum Produkt. In diesen Fällen ist es zweckmäßig, wenn das Erstarrungsbehältnis aus flexiblem, beutelförmigem Folienmaterial besteht. Im vakuumierten Zustand schmiegt es sich den Formen der erstarrten Substanz und gegebenenfalls dem enthaltenen Sorptionsmittel optimal an. Für längere Vakuumzeiträume empfiehlt es sich, mehrschichtiges Folienmaterial zu verwenden. Derartige Mehrschichtfolien sind in der Lebensmittelindustrie z.B. als Vakuum-Verpackungsmaterial für gemahlenes Kaffeepulver im Einsatz. Für das erfindungsgemäße Verfahren, Folien unter Vakuum luftdicht zu verschweißen, wird auf die bekannte Verpackungstechnologie bei Vakuumverpackungsmaschinen verwiesen. Das Verschweißen von Folienbeuteln unter Vakuum ist in vielen Anwendungsfällen, insbesondere der Lebensmittelbranche Stand der Technik.

Erfindungsgemäß kann die vakuumverpackte, erstarrte Substanz der Form oder der Verwendung des zu kühlenden Produktes nachgebildet sein. Zweckmäßiger Weise ist hierzu auch die Form der Vakuumkammer darauf abgestimmt. Beispielhaft sei die Form eines Trink- oder Transportgefäßes angeführt. Entweder kann ein die Flüssigkeit enthaltendes Gefäß in das (evakuierte) Erstarrungsbehältnis gestellt werden oder aber das Erstarrungsbehältnis selbst so geformt sein, dass es die Flüssigkeit bzw. die Speisen direkt aufnehmen kann.

Besonders effizient ist das Verschließen unter Vakuum, wenn zusätzlich das heiße Sorptionsmittel neben der erstarrten Substanz innerhalb des luftdichten Erstarrungsbehältnises unter Vakuum verschlossen wird. In diesem Fall funktioniert die Sorptionsvorrichtung auch nach dem Entnehmen aus dem Vakuumsystem weiter. Wasserdampf kann weiterhin von der erstarrten Substanz zum Sorptionsmittel strömen und die Kälteerzeugung in der Substanz und die Wärmefreisetzung aus dem Sorptionsmittel aufrecht erhalten werden. Voraussetzung ist allerdings, dass der Wasserdampf auch innerhalb der erstarrten Substanz und zum Sorptionsmittel strömen kann. Erfindungsgemäß können hierzu die erstarrte Substanz und das Erstarrungsbehältnis durch eine vorgegebene, die Strömung begünstigende Geometrie der Vakuumkammer so geprägt werden, dass der Strömungsweg für den Wasserdampf von der erstarrten Substanz selbst gebildet wird. Bewährt haben sich für diesen Fall Fasermaterialien in denen die wasserhaltige Substanz aufgesaugt ist und die beim Verdampfen vom abströmenden Wasserdampf aufgebläht werden. Nach dem Erstarren kann durch die geblähte Hohlraumstruktur der Dampf weiterhin zum Sorptionsmittel strömen ohne dass der durch den äußeren Überdruck stark angepresste Folienbeutel die Strömung unterbindet. Zwischen der erstarrten Substanz und dem Sorptionsmittel befindet sich in diesem Fall eine thermisch isolierende Schicht.

Technisch und wirtschaftlich interessant sind Erstarrungsbehältnisse, in Form von Tabletts zum Speisentransport mit nebeneinanderliegenden heißen und kalten Ablageflächen. Diese können dabei vorteilhaft zu Schalen geformt sein, in welche die Speisen direkt gefüllt werden können. Vorteilhaft sind auch Wärme/Kälte-Akkus, bei denen die heiße und die kalte Seite sich gegenüberstehen. Diese lassen sich optimal zum Trennen warmer und kalter Bereiche in Kühlboxen und Transportverpackungen einsetzen. Zwischen heißer und kalter Zone ist in diesen Fällen ein isolierendes Distanzmaterial einzulegen, das auch bei durch den äußeren Luftdruck aufgepresstem Erstarrungsbehältnis die Dampfströmung zum Sorptionsmittel gewährleistet.

Bedingt durch den niedrigen Druck innerhalb des Vakuumsystems können die noch nicht erstarrten, wasserhaltigen Substanzen aus einem außerhalb der Vakuumkammer befindlichen Behältnis eingesaugt werden. Mechanische Fördervorrichtungen in den Zuleitungen erübrigen sich dadurch. Besonders effektiv erweist es sich, das Ende der Zuleitung mit einer Düse zu bestücken, die der wasserhaltigen Substanz beim Entritt in die Vakuumkammer einen Drall aufzwingt oder/und in einen Strahl feiner Tröpfen zerstäubt.
Besonders vorteilhaft ist es, die Zuleitungen in Form flexibler Schläuche auszuführen. Sie können dann leicht in handelsübliche Vorratsbehälter eingesteckt werden. Als Vorratsbehälter für die wasserhaltigen Substanzen haben sich beispielsweise Mineralwasserflaschen, Fässer, Milchflaschen und Fruchtsaftbehälter bewährt.
Vorteilhaft ist auch, in die Vakuumkammer mehrere Zuleitungen zu legen. Damit können in einem Evakuiervorgang mehrere Substanzen nacheinander (oder auch gleichzeitig) erstarrt werden. Im Falle von Speiseeis-Substanzen können unterschiedliche Eissorten auf- bzw. ineinander gefroren werden. Zudem ist die Vakuumkammer für unterschiedliche Eissorten sofort funktionsbereit. Bei Anforderung einer gewünschten Eissorte muss lediglich die dafür vorgesehene Zuleitung freigegeben werden.

Beim Einströmen in die Vakuumkammer schäumen viele, insbesondere fetthaltige Substanzen auf und gefrieren in diesem geschäumten Zustand. Die Volumenzunahme kann leicht das 20fache des flüssigen Zustandes erreichen. Es entstehen neue, bisher nicht bekannte Produktformen.

Bei anderen wasserhaltigen Substanzen kann es interessant sein, mittels Rührwerken die erstarrende Substanz zu rotieren und zu vermischen. Auch in diesem Fall sind neuartige Erscheinungsformen generierbar. Mittels schaumbesenartigen Vorrichtungen kann auch ein unerwünschtes Aufschäumen der wasserhaltigen Substanzen unterdrückt werden.
Bekannt ist auch gefrorene Substanzen durch rotierende Messer zu pastösen, schaumartigen Gebilden aufzuschäumen. Auch diese Behandlungstechniken können mit der bereits erstarrten Substanz innerhalb der Evakuiervorrichtung angewandt werden. Von Vorteil ist, wenn dies unter Einleitung geeigneter Gase wie z.B. Distickstoffoxid (Lachgas) erfolgt. Die gefrorene Struktur unterscheidet sich damit nicht nur in der äußeren Form sondern auch in der inneren Zusammensetzung von bisher bekannten Handelsformen.

Erfindungsgemäß kann die wasserhaltige Substanz auch vor dem Erstarren in einer saugfähigen Matrix aufgesaugt sein. In diesem Fall ist ein potentielles Aufschäumen bzw. ein Spritzen unterdrückt. Als saugfähige Matrix sind faserförmige Stoffe wie Watte oder kanalbildende Strukturen wie Wellpappe aber auch essbare Backwaren vorteilhaft.

Vorteilhaft ist es auch die wasserhaltige Substanz in einer separaten Lager- und Transportverpackung vor dem Erstarren aufzubewahren. Diese Verpackung wird dann vor dem Einlegen in die Evakuiervorrichtung geöffnet und die passend abgefüllte, wasserhaltige Substanz anschließend vereist. Besonders vorteilhaft ist es, wenn die Transportverpackung so ausgeführt ist, dass sie unter Vakuum an einer dafür vorgesehenen Stelle selbsttätig aufplatzt und die wasserhaltige Substanz freisetzt und verteilt. Vorteilhaft ist es zudem, wenn die Transportverpackung Teil des Erstarrungsbehältnisses ist. In diesem Fall kann auch das Sorptionsmittel bereits im Erstarrungsbehältnis verpackt sein, da das Wasser der wasserhaltigen Substanz dann während des Lagerzeitraumes nicht zum Sorptionsmittel gelangen kann. Derartige Verpackungseinheiten enthalten die wasserhaltige Substanz und das dafür notwendig Sorptionsmittel in benutzerfreundlicher, portionsgerechter Größe.
Beim Einsatz saugfähiger Fasermaterialien kann es überdies zweckmäßig sein durch eine geeignete Formgebung der Vakuumkammer im Bereich der Auflage des Erstarrungsbehältnisse das noch formbare Fasermaterial so zu formen, dass nach der Erstarrung der wasserhaltigen Substanz der Strömungsweg für den Wasserdampf von der zu erstarrenden Substanz zum Sorptionsmittel erhalten bleibt. Strömungskanäle und eine selbstragende Struktur können damit allein durch Vereisen und ohne zusätzliche Stützmittel erzeugt werden.

Die Vakuumpumpe hat die Aufgabe, möglichst schnell den Systemdruck unter den Wasserdampfdruck der zu erstarrenden Substanz abzusenken. Eine Pumpe mit hohem Saugvolumen ist von Vorteil, wenn die Abpumpzeit möglichst kurz gehalten werden soll. Andererseits genügt während des Erstarrungsvorgangs eine kleine Pumpleistung, um die freigesetzten, nicht sorbierbaren Gase aus dem Sorptionsstoff abzusaugen. Falls ölgeschmierte Drehschieber-Vakuumpumpen zum Einsatz kommen, ist darauf zu achten, dass eine Ölrückströmsicherung vorhanden und der Ausstoß von Ölnebel aus der Ausblasöffnung unterdrückt wird. In der gewerblichen Vakuumverpackung sind entsprechende Vakuumpumpen mit einer Saugleistung ab etwa 20 m³/h im Einsatz. Sofern diese Pumpen den erforderlichen Enddruck von weniger als 6 mbar erreichen, sind sie auch für den erfindungsgemäßen Einsatz geeignet.
Besonders vorteilhaft kann es sein, wenn das Vakuum stromlos erzeugt werden kann. Die Europäische Patentschrift EP 611888 beschreibt hierzu z. B. eine manuell betätigbare Pumpe, die einen ausreichend tiefen Enddruck erreicht.

Das Vakuumsystem sollte vorteilhafterweise so gestaltet sein, dass der Wasserdampf den eingefüllten Sorptionsstoff gleichmaßig erreichen kann. Der Anteil an nicht mit Sorptionsstoff ausgefüllten Hohlräumen und Zuleitungen soll möglichst klein sein, um den notwendigen Arbeitsdruck schnell erreichen zu können.

Bei der Sorptionsreaktion wird Sorptionswärme frei, die den Sorptionsstoff erhitzt. Die Aufnahmefähigkeit für Wasser nimmt bei höheren Temperaturen stark ab. Um eine hohe Kühlleistung über einen längeren Zeitraum aufrecht zu erhalten, ist es sinnvoll, das Sorptionsmittel mittels geeigneter Kühlvorrichtungen zu kühlen. Vorteilhaft sind hierzu Wärmetauscher für Luft oder spezielle Kühlwasserkreisläufe. Sehr effizient ist es auch, den Sorptionsbehälter in ein Wasserbad zu stellen. Das während des Kühlprozesses erwärmte Wasser kann anschließend zur Reinigung der Vorrichtung benutzt werden.

Das Sorptionsmittel hat die Aufgabe, den Wasserdampf zu sorbieren; d. h. den Wasserdampf innerhalb der Kristall-Struktur zu kondensieren und zu binden. Sorptionsmittel haben nur eine begrenzte Aufnahmefähigkeit für Wassermoleküle. Eine Erschöpfung macht sich dadurch bemerkbar, dass trotz laufender Vakuumpumpe, die Erstarrungsleistung abnimmt oder gar die Erstarrungstemperatur nicht mehr erreicht werden kann. In diesem Fall muss das Sorptionsmittel durch frisches ersetzt oder aber durch Wärmezufuhr regeneriert werden. Im ersten Fall hat das Vakuumsystem eine Öffnung, über welche die gesättigte Sorptionsmittelmenge entnommen und durch eine regenerierte ersetzt werden kann.

Zum Regenerieren des Sorptionsmittels muss dieses, abhängig vom eingesetzten Material, auf Temperaturen zwischen 150°C und 300°C erhitzt werden. Geschieht dies innerhalb des Vakuumsystems, muss der freigesetzte Wasserdampf gefahrlos abströmen können. Vorteilhaft geschieht die Desorption innerhalb des Vakuumsystems mittels Heißluft. Die abströmende Luft trägt den desorbierten Wasserdampf mit aus der Vakuumkammer. Für den Fall, dass die gesamte Sorptionsmittelfüllung erneuert wird, ist es von Vorteil, diese in einem dampfdurchlässigen Gehäuse so zu verpacken, dass sie zusammen mit dem Gehäuse ausgewechselt werden kann. Als dampfdurchlässiges Gehäuse sind Strukturen aus Streckmetall, Drahtgewebe, Drahtgitter und temperaturstabilen Geflechten von Vorteil.

Als Sorptionsmittel kommt vorteilhaft Zeolith zum Einsatz. Zeolith kann in seiner regelmäßigen Kristallstruktur bis zu 36 Massen-% Wasser reversibel sorbieren. Er hat auch bei relativ hohen Temperaturen (über 80° C) noch ein beträchtliches Wasserdampf-Sorptionsvermögen und eignet sich deshalb besonders für den erfindungsgemäßen Einsatz.
Zeolith ist ein kristallines Mineral, das aus einer regelmäßigen Gerüststruktur aus Silizium- und Aluminiumoxiden besteht. Diese Gerüststruktur enthält Hohlräume, in welchen Wassermoleküle unter Wärmefreisetzung sorbiert werden können. Innerhalb der Gerüststruktur sind die Wassermoleküle starken Feldkräften ausgesetzt, deren Stärke von der bereits in der Gerüststruktur enthaltenen Wassermenge und der Temperatur des Zeolithen abhängt. Für den praktischen Gebrauch können pro 100 Gramm Zeolith bis zu 25 Gramm Wasser sorbiert werden. Zeolithe sind feste Stoffe ohne störende Volumenausdehnung bei der Sorptions- bzw. Desorptionsreaktion. Die Gerüststruktur ist von allen Seiten für die Wasserdampfmoleküle frei zugänglich. Wegen der damit einhergehenden schnellen Sorptionsreaktion eignen sie sich für den erfindungsgemäßen Gebrauch besonders gut.
Für eine wirtschaftliche Betriebsweise sind Zeolithtemperaturen von 250 bis 350° C bei der Regeneration und von 50 bis 120° C bei der Sorption empfehlenswert. Besonders vorteilhaft ist es, die Regeneration durch einen Heißluftstrom mit Lufttemperaturen über 300° C durchzuführen. Falls die Zeolithfüllung in einer dünnen Schicht angeordnet ist, kann die Regeneration innerhalb weniger Minuten abgeschlossen sein.

Um eine gleichmäßige Sorption innerhalb der Sorptionsmittelfüllung und einen geringen Druckabfall zu gewährleisten, haben sich besonders Sorptionsmittel-Granulate bewährt. Granulatdurchmesser zwischen 3 und 5 mm zeigen dabei die besten Resultate. Insbesondere bei flexiblen Erstarrungsbehältnissen, die neben der erstarrten Substanz auch noch die Sorptionsmittelmenge unter Vakuum enthalten, haben sich plattenförmige Zeolithformkörper mit feinen Strömungskanälen gut bewährt. Diese sind leicht zu handhaben, druckstabil und bleiben auch unter Vakuum, anders als eine lose Granulatschüttung, formfest.

Mit "wasserhaltige Substanzen" sind Substanzen bezeichnet, die mindestens soviel Wasser enthalten, dass beim Verdampfen der kompletten Wassermenge die verbleibende Substanz auf das gewünschte Temperatumiveau abgesenkt werden kann. Beispiele für erfindungsgemäße Flüssigkeiten sind Wasser, Salzwasser, Säfte, Softdrinks, Kaffee, Tee, Milch und Milchprodukte wie beispielsweise Speiseeismischungen. Auch Flüssigkeiten, die mit leichterflüchtigen Stoffen wie Kohlensäure, Alkohol oder Aromastoffen angereichert sind, fallen unter die Bezeichnung, obwohl sie sich wegen der parallel ablaufenden Verdampfung leichtflüchtiger Beimischungen für die direkte Kühlung weniger eignen. Durch den Einsatz von saugstarken Vakuumpumpen können diese leichtflüchtigen Stoffe jedoch durch das Sorptionsmittel hindurch abgesaugt werden.

Um die maximale Kältemenge zu erzeugen, muss das Sorptionsmittel zwischen mehreren Erstarrungsprozessen seine Sorptionswärme, z.B. an die Umgebung, abführen können. Eine besonders intensive Kühlwirkung erreicht man, wenn der Sorber-Behälter eine ausreichend große Wärmetauscherfläche für den ihn umströmenden Luftstrom aufweist. Von Vorteil ist, wenn das Sorptionsmittel auf Umgebungstemperatur gekühlt werden kann, um eine möglichst große Wasserdampfmenge sorbieren zu können. Feste Sorptionsmittel haben allerdings eine geringe Wärmeleitung und einen schlechten Wärmeübergang. Da auch der Wärmeübergang einer Luftströmung auf den Sorptionsmittel-Wärmetauscher in der gleichen Größenordnung liegt, empfehlen sich prinzipiell Wärmetauscher ohne Berippung, wie beispielsweise Zylinder-, Platten- oder Rohrgeometrien. Da insbesondere Zeolithgranulate eine geringe Wärmeleitung haben, sind die Sorptionsbehälter so auszulegen, dass der durchschnittliche Wärmeleitungsweg für die umgesetzten Wärmemengen 5 cm nicht übersteigt.
Wenn erfindungsgemäß für jeden Erstarrungsprozess eine neue Sorptionsmittelfüllung zum Einsatz kommt, ist ein separater Wärmetauscher nicht notwendig, da die im Sorptionsmittel frei werdende Wärme außerhalb des Vakuumsystems über die Behälterwand abgegeben wird.

Verwendbar sind jedoch auch andere Sorptionsmittel, die Wasserdampf sorbieren und bei der Sorptionsreaktion fest bleibt. Einige feste Sorptionsmittel, wie beispielsweise Molekularsiebe, sind stabil genug, um ohne Volumenänderung auch äußere Überdrücke bei dünnwandigen Behälterwänden abstützen zu können. Zusätzliche Versteifungen oder dickwandige Wärmetauscherflächen sind deshalb nicht nötig. Diese Eigenschaft kann bei den erfindungsgemäß vakuumdichten Erstarrungsbehältnissen vorteilhaft genutzt werden.

Es kann auch vorteilhaft sein, den das Sorptionsmittel enthaltenden Behälter mit einer thermischen Isolierung zu versehen, um während des Desorptionsprozesses die Wärmeverluste an die Umgebung zu minimieren.

Die Zeichnung zeigt in:

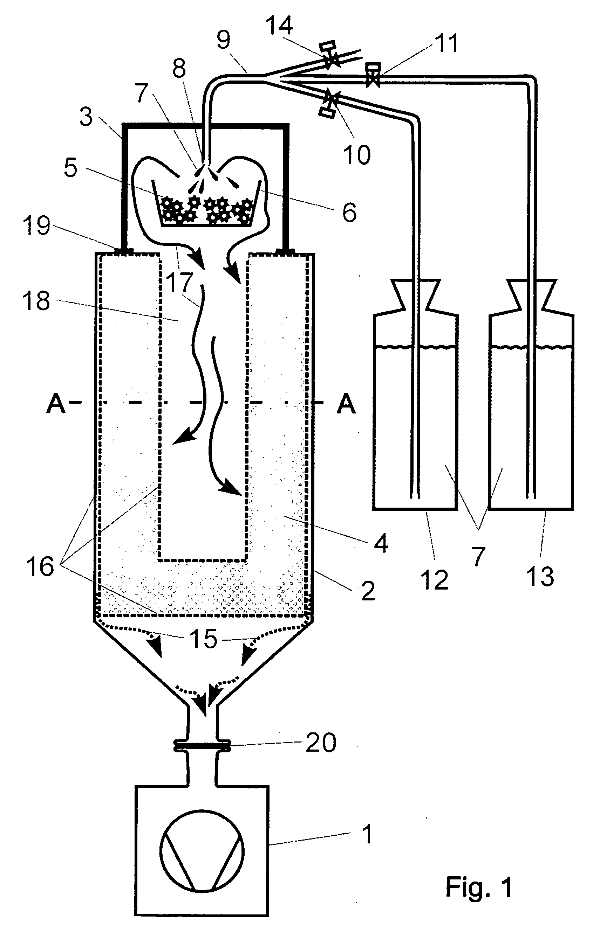

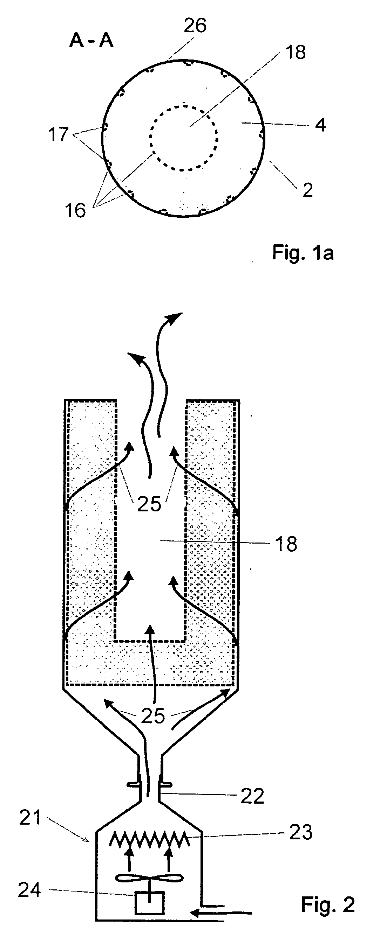

Fig. 1 eine erfindungsgemäße Evakuiervorrichtung in schematischer und geschnittener Darstellung,
Fig. 1 a den Sorptionsmittelbehälter aus Fig. 1 in quergeschnittener Ansicht A-A,
Fig. 2 eine Regenerationsstation für einen Sorptionsmittelbehälter,
Fig. 3 eine weitere erfindungsgemäße Evakuiervorrichtung,
Fig. 4 eine beispielhafte Verwendung eines Erstarrungsbehältnisses,
Fig. 4a eine weitere Ausgestaltung eines Erstarrungsbehältnisses in der Form eines Speisentabletts und
Fig. 5 eine Evakuiervorrichtung mit einer integrierten elektrischen Heizung.

Die Evakuiervorrichtung nach Fig. 1 besteht aus einer Vakuumpumpe 1, die einen Sorptionsmittelbehälter 2 und eine Vakuumkammer 3 evakuieren kann. Der Sorptionsmittelbehälter 2 enthält ein Sorptionsmittel 4, eingebettet in ein metallisches Lochblech-Gehäuse 16 zur ungehinderten Aufnahme von Wasserdampf. Die durchsichtige und vom Sorptionsmittelbehälter 2 an einer Dichtleiste 19 abnehmbare Vakuumkammer 3 enthält ein ebenfalls durchsichtiges Erstarrungsbehältnis 6 in welches eine wasserhaltige Substanz 7 aus einer Düse 8 eingedüst wird. Durch augenblickliches Verdampfen von Wasser aus der wasserhaltigen Substanz 7 entsteht eine schaumartige, erstarrte Substanz 5. Über eine Leitung 9 und Magnetventile 10, 11 steht die Düse 8 mit Vorratstanks 12, 13 für wasserhaltige Substanzen 7 in Verbindung. Über ein Belüftungsventil 14 kann die Evakuiervorrichtung belüftet werden. An einer Verbindungsstelle 20 kann der Sorptionsmittelbehälter 2 vom restlichen Vakuumsystem getrennt und wie in Fig. 2 gezeigt, auf eine Regenerationseinheit 21 gesetzt werden. Diese enthält einen Anschlussstutzen 22 zum Aufsetzen des Sorptionsmittelbehälters 2, eine elektrische Heizeinrichtung 23 und ein Gebläse 24, das erhitzte Luft entlang der Pfeile 25 durch das Sorptionsmittel 4 drückt.

Fig. 1a zeigt den zylindrischen Sorptionsbehälter 2 aus Fig. 1 entlang der Linie A-A quer geschnitten. Entlang der zylindrischen Außenhülle 26 sind 13 Strömungskanäle 17 angeordnet, über welche Luft und nicht sorbierbare Gase aus dem Vakuumsystem abgesaugt werden ohne dass zugleich Wasserdampf mit absaugt werden muss. Durch die zylindrische Anordnung kann der Wasserdampf (und die nicht sorbierbaren Gase) entlang eines Innenkanals 18 weit in das Sorptionsmittel 4 einströmen. Entlang des Innenkanals 18 besteht eine große Anströmfläche für die schnelle Sorption der großen Wasserdampfvolumina. Die gleichmäßige Verteilung der Strömungskanäle 17 entlang der Außenhülle 26 stellt sicher, dass der Strömungsweg für den Wasserdampf innerhalb des Sorptionsmittels 4 einheitlich lang ist. Nur auf diese Weise ist sichergestellt, dass alle Sorptionsmittelbereiche ausreichend Wasserdampf sorbieren können, bevor die ersten Wasserdampfmoleküle die Strömungskanäle 17 erreichen und von der Vakuumpumpe angesaugt werden. Zwischen den Strömungskanälen 17 besteht eine ausreichend große Kontaktfläche für das Sorptionsmittel 4 mit der Außenhülle 26 des Sorptionsbehälters 2, um Sorptionswärme an die Umgebung abgeben zu können.

Bei der Evakuiervorrichtung nach Fig. 1 wird zum erfindungsgemäßen Erstarren wasserhaltiger Substanzen 7 das Erstarrungsbehältnis 6 in die Vakuumkammer 3 eingesetzt und die Vakuumkammer 3 vakuumdicht auf den Sorptionsmittelbehälter 2 aufgesetzt. Die Vakuumpumpe 1 wird bei geschlossenem Belüftungsventil 14 in Betrieb gesetzt. Sie saugt Gas aus dem Vakuumsystem durch das Sorptionsmittel 4 ab. Bei einem Innendruck von weniger als 6 mbar (abs.) wird eines (oder auch beide) der Magnetventile 10, 11 geöffnet. Wasserhaltige Substanz 7, z. B. eine fertige Mischung zur Zubreitung von Speiseeis, wird aus der Düse 8 angesaugt. Über die Leitung 9 kann die fertige Mischung aus den Vorratstanks 12, 13 nachströmen. Durch die schlagartige Verdampfung im Vakuumsystem erstarrt die Substanz 7 zu einem schaumartigen Eisgebilde 5. Der Wasserdampf strömt über den Innenkanal 18 entlang der Dampfpfeile 17 in das Sorptionsmittel 4. Hier wird der Dampf augenblicklich sorbiert und in die Hohlraumstruktur des Sorptionsmittels 4 eingelagert. Nur nicht sorbierbare Gase werden durch das Sorptionsmittel 4 hindurch entlang der Pfeile 15 von der Vakuumpumpe 1 abgesaugt. Die Menge des Sorptionsmittels 4 ist so bemessen, dass trotz Temperaturerhöhung ausreichend Wasserdampf von der zu erstarrenden Substanz abdampfen und vom Sorptionsmittel aufgenommen werden kann. Nachdem ausreichend erstarrte Substanz 5 erzeugt wurde, wird das Magnetventil 10, 11 geschlossen, die Vakuumpumpe 1 abgestellt und das Belüftungsventil 14 geöffnet. Beim Öffnen des Belüftungsventils 14 wird die noch in der Leitung 9 befindliche wasserhaltige Substanz 7 ausgeblasen und die Leitung 9 samt Düse 8 gereinigt. Nach dem schnellen Fluten der Evakuiervorrichtung kann die Vakuumkammer 3 abgehoben und das Erstarrungsbehältnis 6 samt erstarrter Substanz 5 entnommen werden. Anschließend kann bei ausreichend dimensionierter Sorptionsmittelfüllung ohne Wartezeit der nächste Erstarrungsvorgang eingeleitet werden.

Um erschöpftes Sorptionsmittel 4 innerhalb des Sorptionsmittelbehälters 2 zu regenerieren wird der Behälter vom restlichen Vakuumsystem getrennt und auf den Anschlussstutzen 22 der Regeneriereinheit 21 gesetzt (Fig. 2). Mittels Gebläse 24 und elektrischer Heizeinrichtung 23 wird Heißluft von mindestens 200 °C in umgekehrter Strömungsrichtung 25 durch das Sorptionsmittel 4 gepresst. Die heiße Luft erwärmt das Sorptionsmittel 4 und fördert den dabei desorbierten Wasserdampf aus dem Sorptionsbehälter 2. Die Regeneration gilt dann als abgeschlossen, wenn die Wasserdampfströmung aus dem Sorptionsmittel aufhört und/oder das Sorptionsmittel 4 homogen die Temperatur der Heißluft erreicht hat. Nach dem Abkühlen des Sorptionsmittels 4 kann der Sorptionsmittelbehälter 2 wieder in die restliche Evakuiervorrichtung integriert werden.

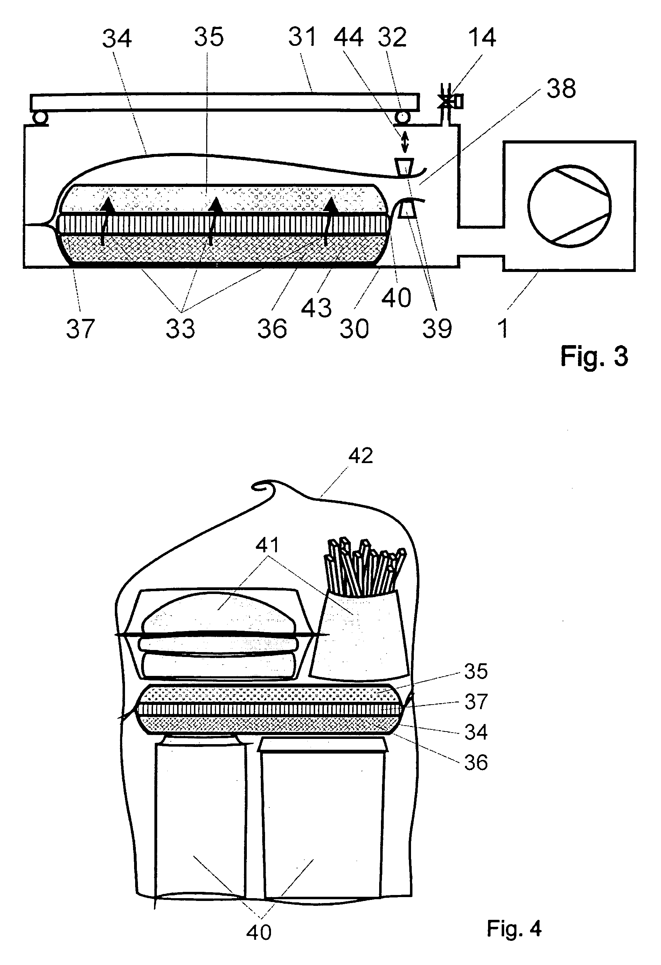

Fig. 3 zeigt eine weitere erfindungsgemäße Ausgestaltung einer Evakuiervorrichtung. Die Vakuumpumpe 1 ist an eine Vakuumkammer 30 angeschlossen, die über einen durchsichtigen Deckel 31 und eine Dichtung 32 vakuumdicht verschlossen werden kann. In der Vakuumkammer 30 befindest sich ein flexibles, beutelförmiges Erstarrungsbehältnis 34 in dem ein plattenförmiges Sorptionsmittel 35 und eine wasserhaltige Substanz 36 enthalten sind. Die wasserhaltige Substanz 36 ist in einem saugfähigen Material 43 gebunden, das an seiner oberen Seite, mit einem wasserabweisenden, dampfdurchlässigen und isolierenden Distanzmaterial 37 abgedeckt ist. Das Distanzmaterial 37 dient zum einen dazu, während der Sorptionsreaktion den von der wasserhaltigen Substanz 36 abströmenden Wasserdampf gezielt zum Sorptionsmittel 35 zu lenken und zum anderen dazu, das Wasser nicht flüssig zum Sorptionsmittel 35 gelangen zu lassen.
Die Öffnung 38 des Erstarrungsbehältnises 34 befindet sich zwischen zwei Schweißbalken 39, die beim Absenken des oberen Schweißbalkens 39 in Richtung des Doppelpfeils 44 das Erstarrungsbehältnis 34 durch Verschweißen noch unter Vakuum vakuumdicht verschließen.

Zum Erstarren der wasserhaltigen Substanz 36 nach Fig. 3 wird zunächst ein flexibles Erstarrungsbehältnis 34 in Form eines Mehrschichtfolienbeutels, der bereits das Sorptionsmittel 35, das Distanzmaterial 37 und ein wasserfreies, saugfähiges Material 43 enthält, an einer vorgesehenen Stelle geöffnet. Das saugfähige Material wird daraufhin durch Eintauchen in eine Wasserschale mit Wasser getränkt. Die so vorbereitete Einheit wird in das Erstarrungsbehältnis 34 geschoben und zusammen mit diesem in die Vakuumkammer 30 mit der Öffnung 38 zwischen die beiden Schweißzangen 39 gelegt. Beim Einsetzten ist darauf zu achten, das insbesondere im Bereich 40 das Distanzmaterial und das Erstarrungsbehältnis 34 eine für den Wasserdampf undurchdringliche Barriere bilden. Keinesfalls darf Wasserdampf unter Umgehung des Sorptionsmittels 35 von der Vakuumpumpe abgesaugt werden. Der Deckel 31 und das Belüftungsventil 14 werden sodann geschlossen und die Vakuumpumpe 1 gestartet. Sobald das sinkende Druckniveau den Dampfdruck der wasserhaltigen Substanz 36 erreicht hat, verdampft ein Teil des Wassers. Der Wasserdampf strömt durch das Distanzmaterial 37 zum Sorptionsmittel 35 das diesen sofort sorbiert. Bei weiter sinkendem Druckniveau wird alsbald der Erstarrungspunkt erreicht, bei dem die wasserhaltige Substanz 36 zu vereisen beginnt. Spätestens zu diesem Zeitpunkt kann die Öffnung 38 des Erstarrungsbehältnises 34 durch Betätigen der Schweißbalken 39 vakuumdicht verschlossen werden. Die Vakuumpumpe 1 kann dann abgestellt und die Vakuumkammer 30 über das Belüftungsventil 14 geflutet werden. Nach dem Öffnen des Deckels 31 kann das Erstarrungsbehältnis 34 aus dem Vakuumsystem entnommen werden und seiner Bestimmung zugeführt werden. Da innerhalb des vakuumdichten Erstarrungsbehältnisses 34 die Sorptionsreaktion weiterhin abläuft, wird sowohl im Sorptionsmittel 35 Wärme als auch in der erstarrten Substanz 36 Kälte frei gesetzt.

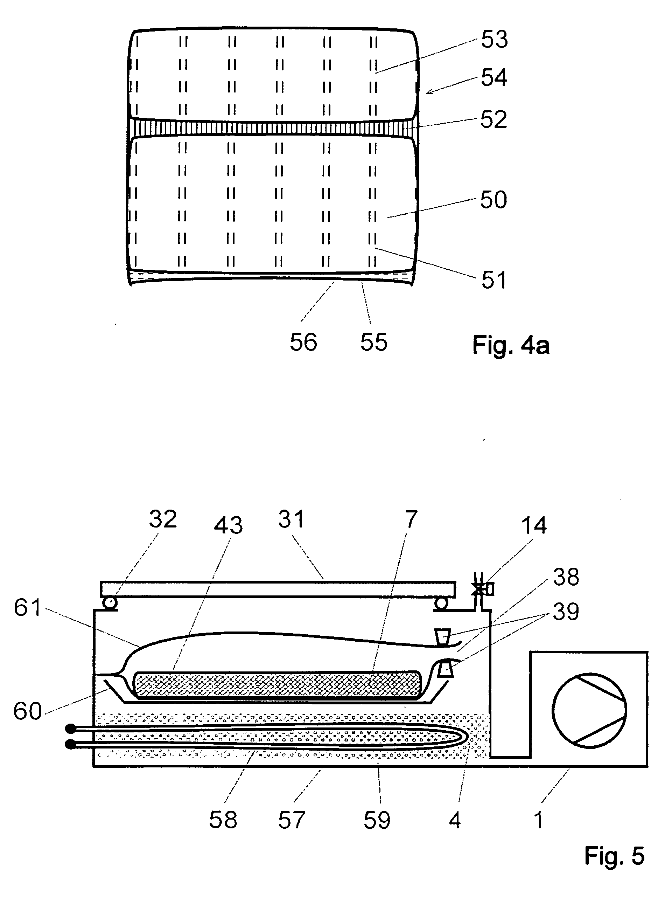

In Fig. 4 ist eine mögliche Nutzung des vakuumdichten Erstarrungsbehältnises 34 dargestellt. In einer Papierverpackung 42 befinden sich in einer unteren Lage zu kühlende Lebensmittel 40 wie z.B. Getränkedosen und Salatschalen. Darüber befindet sich das evakuierte Erstarrungsbehältnis 34 mit der erstarrten Substanz 36 nach unten zeigend. Das wärmeabgebende Sorptionsmittel 35 erwärmt über ihm befindliche, warme Lebensmittel 41 wie Hamburger und Pommes Frites.
Als wasserhaltige Substanz 36 kommt Leitungswasser zum Einsatz. Der Erstarrungspunkt liegt dann exakt bei 0 °C. Vorteilhaft kann ebenso Salzwasser verwendet werden. Der Gefrierpunkt liegt dann je nach Salzgehalt deutlich unter 0 °C, im kältesten Fall bei -18 °C. Auch bei diesen tiefen Temperaturen kann die als Sorptionsmittel 35 verwendete Zeolithplatte Wärme auf einem Niveau oberhalb von 80 °C abgeben.
Vorteilhaft ist es auch das Erstarrungsbehältnis 34 senkrecht in eine isolierte, nicht gezeichnete Box zu stellen und den Innenraum der Box in nebeneinander liegende kalte und warme Bereiche zu unterteilen.

In Fig. 4a ist eine weitere vorteilhafte Ausgestaltung eines Erstarrungsbehältnisses 54 in der Form eines Speisentabletts dargestellt. Das flache Speisentablett enthält einen mit Strömungskanälen 53 durchzogenen kalten Bereich, der aus gefrorener, vorher mit Wasser getränkter Wellpappe besteht. Die Erstarrung erfolgte hierbei in einer Vakuumkammer ähnlich Fig. 3. Das Sorptionsmittel 4 ist in dieser Ausführungsform eine flache, gepresste Zeolithplatte 50 mit eingearbeiteten Strömungskanälen 51. Das thermisch isolierende Distanzmaterial 52 besteht aus wellpapierartig geformten Kunststofffolien, die den Dampf ungehindert strömen lassen, obwohl der Folienbeutel 55 durch den äußeren Luftdruck auf den inneren Strukturen lastet. Der Folienbeutel 55 ist an der Öffnung 56 vakuumfest verschweißt. Da die Sorptionsreaktion dank der vakuumfesten Kanäle 53, 51 auch außerhalb der Evakuiervorrichtung ablaufen kann, kühlt und heizt das Speisentablett die zum Essen abgestellten Speisen. Das Speisentablett kann zusätzliche Vertiefungen und Umrandungen enthalten, die zur direkten Aufnahme oder Separierung von Speisen genutzt werden können

In Fig. 5 ist eine weitere vorteilhafte Evakuiervorrichtung dargestellt. Bezugszeichen, die bereits in den vorausgehenden Zeichnungen vorkommen sind beibehalten.
Das Sorptionsmittel 4 befindet sich im unteren Teil der Vakuumkammer 57, in gutem Kontakt zu einer elektrischen Heizvorrichtung 58. Die Vakuumpumpe 1 saugt über einen unterhalb des Sorptionsmittels 4 verlaufenden Strömungskanal 59 Luft und nicht sorbierbare Gase aus der Vakuumkammer 57 ab. Auf einer oberhalb des Sorptionsmittels 4 angeordneten Schale 60 befindet sich ein flexibler Mehrschichtbeutel 61, welcher ein mit der wasserhaltigen Substanz 7 getränktes saugfähiges Material 43 enthält. Über einen Deckel 31 kann das Erstarrungsbehältnis 53 in die Vakuumkammer 50 eingeführt werden. Die Öffnung 38 des Mehrschichtbeutels 61 befindet sich auch in dieser Anordnung zwischen zwei beweglichen Schweißbalken 39. Im Gegensatz zu Fig. 3 befindet sich das Sorptionsmittel 4 außerhalb des Erstarrungsbehältnisses. Zur Regeneration verbleibt es innerhalb der Vakuumkammer 57. Über die elektrische Heizvorrichtung 58 kann es aufgeheizt werden. Der entweichende Wasserdampf strömt durch den dann geöffnetem Deckel 31 ungehindert ab.
Zu Beginn des Evakuierprozesses wird das mit der wasserhaltigen Substanz 7 getränkte saugfähige Material 43 in den Mehrschichtbeutel 61 gesteckt und dieser mit seiner Öffnung 38 zwischen die Schweißbalken 39 gelegt. Nach Schlieβen des Deckels 31 und des Belüftungsventils 14 evakuiert auch hier die Vakuumpumpe 1 die Vakuumkammer 57. Der von der zu erstarrenden Substanz 7 abströmende Wasserdampf wird vom Sorptionsmittel 4 sorbiert. Nach dem Erstarren der Substanz 7 wird noch unter Vakuum der Mehrschichtbeutel 61 verschlossen und nach dem Fluten der Vakuumkammer 57 anschließend entnommen. Der auf diese Weise innerhalb weniger Sekunden entstandene Eisakku kann z. B. zum Kalthalten von Speisen und Getränken in Kühltaschen benutzt werden. Da das im Laufe der Zeit schmelzende Wasser unter Vakuum steht, besteht ein guter thermischer Kontakt zum Mehrschichtbeutel 61. Schmelzwasser kann den Inhalt der Kühltasche nicht befeuchten.

## Patentansprüche

1. Verfahren zum Erstarren wasserhaltiger Substanzen durch direkte Verdampfung von Wasser aus der Substanz und Sorption des Wasserdampfes in einem Sorptionsmittel innerhalb eines Vakuumsystems,
**dadurch gekennzeichnet, dass**
die wasserhaltige Substanz und das Sorptionsmittel von Umgebungsdruckniveau auf einen Systemdruck von unter 5 mbar (absolut) mittels einer Vakuumpumpe evakuiert werden und die dabei von der Vakuumpumpe abgesaugten, nicht sorbierbaren Gase durch das Sorptionsmittel hindurchgesaugt werden, dass
die Masse des verwendeten Sorptionsmittels mindestens die Hälfte der Masse des Wasseranteils in der Substanz beträgt, dass
der Erstarrungsvorgang in weniger als 2 Minuten, insbesondere in weniger als 20 Sekunden erreicht ist, dass
die wasserhaltige Substanz in einem aus dem Vakuumsystem entnehmbaren Erstarrungsbehältnis erstarrt und dass das Vakuumsystem anschließend belüftet wird und die erstarrte Substanz zusammen mit dem Erstarrungsbehältnis aus dem Vakuumsystem entnommen wird.

2. Verfahren nach Anspruch 1,
**dadurch gekennzeichnet, dass**
die wasserhaltige Substanz in das Vakuumsystem eingesaugt wird und beim Eintritt erstarrt.

3. Verfahren nach einem der vorangehenden Ansprüche,
**dadurch gekennzeichnet, dass** das Sorptionsmittel nach der Sättigung mit Wasserdampf mittels Durchleiten heißer Luft regeneriert wird.

4. Verfahren nach einem der vorangehenden Ansprüche,
**dadurch gekennzeichnet, dass**
das Sorptionsmittel vor jedem Erstarrungsvorgang in das Vakuumsystem passend zur Menge und Art der zu erstarrenden Substanz eingebracht wird.

5. Verfahren nach einem der vorangehenden Ansprüche,
**dadurch gekennzeichnet, dass**
die wasserhaltige Substanz während des Erstarrungsvorgangs mechanisch durchmischt wird.

6. Verfahren nach einem der vorangehenden Ansprüche,
**dadurch gekennzeichnet, dass**
die wasserhaltige Substanz in einer saugfähigen Struktur aufgesaugt ist, die ein Aufspritzen beim schnellen Evakuier- und Erstarrungsvorgang unterdrückt.

7. Verfahren nach einem der vorausgehenden Ansprüche,
**dadurch gekennzeichnet, dass**
die erstarrte Substanz im Erstarrungsbehältnis noch innerhalb des Vakuumsystems luftdicht verpackt wird und nach dem Belüften des Vakuumsystems vakuumverpackt bleibt.

8. Verfahren nach Anspruch 6,
**dadurch gekennzeichnet, dass**
auch das Sorptionsmittel zusammen mit der erstarrten Substanz im Erstarrungsbehältnis luftdicht versiegelt wird und eine Strömungsverbindung für Wasserdampf von der erstarrten Substanz zum Sorptionsmittel erhalten bleibt.

9. Verfahren nach einem der vorangehenden Ansprüche,
**dadurch gekennzeichnet, dass**
die erstarrte Substanz noch innerhalb des Vakuumsystems unter Gaszufuhr durch mechanische Bearbeitung auf ein höheres Volumen aufgeschäumt wird.

10. Verfahren nach einem der vorangehenden Ansprüche,
**dadurch gekennzeichnet, dass**
das verdampfende Wasser in einem Zeolith enthaltenden Sorptionsmittel sorbiert wird.

11. Evakuiervorrichtung zur Durchführung eines Verfahrens nach einem der vorangehenden Ansprüche,
**gekennzeichnet durch**
eine mechanische Vakuumpumpe mit einem Endvakuum von weniger als 5 mbar absolut,
ein Sorptionsmittel,
eine Vakuumkammer zur Aufnahme eines Erstarrungsbehältnisses und der zu erstarrenden Substanz,
eine Öffnung zur Entnahme der erstarrten Substanz und
eine Belüftungseinrichtung zum Belüften der Vakuumkammer.

12. Evakuiervorrichtung nach Anspruch 10,
**gekennzeichnet durch**
mindestens eine absperrbare Zuleitung für die wasserhaltige Substanz in die Vakuumkammer.

13. Evakuiervorrichtung nach Anspruch 10,
**gekennzeichnet, durch**
eine Rührvorrichtung zum Bewegen der wasserhaltigen Substanz innerhalb der Vakuumkammer.

14. Evakuiervorrichtung nach einem der vorangehenden Vorrichtungsansprüche,
**gekennzeichnet, durch**
eine Heizvorrichtung zum Erhitzen des Sorptionsmittels.

15. Evakuiervorrichtung nach einem der vorangehenden Vorrichtungsansprüche,
**gekennzeichnet, durch**
eine Verschlussvorrichtung zum vakuumdichten Verschließen von Erstarrungsbehältnissen innerhalb der Vakuumkammer.

16. Erstarrungsbehältnis zur Durchführung eines der Verfahren ab Anspruch 1
**dadurch gekennzeichnet, dass**
es als Transport- und Lagerverpackung die wasserhaltige Substanz enthält und vor dem Erstarren eine ausreichende Öffnung für das Abströmen des Wasserdampfes geschaffen werden kann.

17. Erstarrungsbehältnis nach Anspruch 15,
**dadurch gekennzeichnet, dass**
es eine flexible Hülle enthält, die geeignet ist, die erstarrte Substanz vakuumdicht abzuschließen.

18. Erstarrungsbehältnis zur Durchführung eines der Verfahren ab Anspruch 1
**dadurch gekennzeichnet, dass**
das Erstarrungsbehältnis die wasserhaltige Substanz und die zum Erstarren notwendige Sorptionsmittelmenge aufnehmen kann.

19. Erstarrungsbehältnis nach Anspruch 17,
**dadurch gekennzeichnet, dass**
es eine flexible Hülle enthält, die geeignet ist, das Sorptionsmittel und die erstarrte Substanz vakuumdicht zu umschließen.

20. Erstarrungsbehältnis zur Durchführung eines der Verfahren ab Anspruch 1,
**dadurch gekennzeichnet, dass**
das Erstarrungsbehältnis essbares Material oder Sorptionsmittel enthält.
